# EUROPEAN PATENT APPLICATION

(11) **EP 4 848 746 A1**
(43) Date of publication of application: **02.12.2026**
(21) Application number: 26180303.5
(22) Date of filing: 21.05.2026
(51) Int. Cl.: H04N 25/50, H04N 25/773

(54) **PHOTOELECTRIC CONVERSION DEVICE, MOBILE BODY, IMAGING SYSTEM, CONTROL METHOD, AND STORAGE MEDIUM**

(30) Priority: 26.05.2025 JP 2025087514
(71) Applicant: Canon Kabushiki Kaisha, Tokyo 146-8501 (JP)
(72) Inventor: OIGAWA, Makoto, Tokyo, 146-8501 (JP)
(74) Representative: Canon Europe Limited

(57) **Abstract**

A photoelectric conversion device includes: a photoelectric conversion unit configured to generate a photon detection signal by avalanche multiplication; a counter configured to count the photon detection signal output from the photoelectric conversion unit; a timing generator configured to generate a plurality of pulse signals in a plurality of second exposure periods shorter than a first exposure period corresponding to one frame; and a measurement unit configured to measure the number of pulse signals after first detection of photons during the second exposure period based on the pulse signals generated by the timing generator and to measure a count value corresponding to the number of detected photons within the second exposure period in addition to a weighting coefficient. A timing of the pulse signal generated by the timing generator or the weighting coefficient added in the measurement unit is controlled in accordance with the surrounding brightness.

## Description

### TECHNICAL FIELD

The present disclosure relates to a photoelectric conversion device, a mobile body, an imaging system, a control method, and a storage medium.

### BACKGROUND

Photoelectric conversion devices capable of detecting weak light with a single photon level are known. Japanese Patent Laid-Open No. 2025-009969 discloses a photoelectric conversion device including an avalanche photodiode, a waveform shaping circuit that shapes an output waveform of the avalanche photodiode, and a counter that generates a count result by counting signals output by the waveform shaping circuit. Japanese Patent Laid-Open No. 2025-009969 discloses a weighted count driving mode in which a weighting coefficient of counting is changed in accordance with a timing at which photons are incident.

In existing systems, however, suitable control parameters for proper operation under different circumstances are not always set.

### SUMMARY

According to a first aspect of the present disclosure, a photoelectric conversion device includes: a photoelectric conversion unit configured to generate a photon detection signal by avalanche multiplication; a counter configured to count the photon detection signal output from the photoelectric conversion unit; a timing generator configured to generate a plurality of pulse signals in a plurality of second exposure periods shorter than a first exposure period corresponding to one frame; a measurement unit configured to measure the number of pulse signals after first detection of photons during the second exposure period based on the pulse signals generated by the timing generator and to measure a count value corresponding to the number of detected photons within the second exposure period in addition to a weighting coefficient; and a brightness recognition unit configured to determine a surrounding brightness of the photoelectric conversion device. A timing of the pulse signal generated by the timing generator or the weighting coefficient added in the measurement unit is controlled in accordance with the surrounding brightness.

According to a second aspect pf the present disclosure, there is provided a control method of controlling a photoelectric conversion system that includes a photoelectric conversion unit generating a photon detection signal by avalanche multiplication, a counter counting the photon detection signal output from the photoelectric conversion unit, and a timing generator generating a plurality of pulse signals in a plurality of second exposure periods shorter than a first exposure period corresponding to one frame, the control method comprises: measuring the number of pulse signals after first detection of photons during the second exposure period based on the pulse signals generated by the timing generators and measuring a count value corresponding to the number of detected photons within the second exposure period in addition to a weighting coefficient, determining a surrounding brightness of the photoelectric conversion device, and controlling a timing of the pulse signal generated by the timing generator or the weighting coefficient added in the measuring in accordance with the surrounding brightness.

According to a third aspect of the present disclosure, a computer-readable storage medium comprising instructions, which, when executed, cause a computer to perform the method of the second aspect.

According to a fourth aspect of the present disclosure, there is provided a mobile body including the photoelectric conversion device according to the first aspect and a warning device configured to issue a warning based on an output of the photoelectric conversion device.

According to a fifth aspect of the present disclosure, there is provided an imaging system including at least two photoelectric conversion devices according to the first aspect, wherein the at least two photoelectric conversion devices are configured with a different control of a timing of the pulse signals generated by the timing generator or a different weighting coefficient applied in the measurement unit.

According to a sixth aspect of the present disclosure, there is provided a computer program configured to carry out the method of the second aspect.

In the technology of the related art, control parameters corresponding to a measurement range or resolution necessarily appropriate for the brightness of a surrounding environment are not necessarily set. By contrast, the present disclosure provides a means of dynamically optimizing measurement range and resolution by controlling the pulse-signal timing and/or the weighting coefficient in accordance with the surrounding brightness. This achieves improved measurement accuracy compared with prior-art devices, which use fixed control parameters that are not adapted to changes in scene brightness.

Optional features will now be set out. These are applicable singly or in any combination with any aspect of the disclosure.

The measurement unit may increase a value of a weighting coefficient when the brightness recognition unit determines that the surrounding brightness is higher than a predetermined threshold.

The timing generator may decrease the number of pulse signals within the second exposure period when the brightness recognition unit determines that the surrounding brightness is lower than a predetermined threshold.

The measurement unit may decrease a value of a weighting coefficient when the brightness recognition unit determines that the surrounding brightness is lower than a predetermined threshold.

The brightness recognition unit may determine brightness based on a statistical value of a pixel signal of a past frame image.

The brightness recognition unit may determine brightness based on a pixel signal value in a region of interest of an acquired frame image.

The brightness recognition unit may determine brightness based on illuminance information acquired from another measurement instrument.

The brightness recognition unit may determine brightness based on positional information acquired from a measurement instrument.

The brightness recognition unit may determine brightness by comparing the surrounding brightness with a predetermined threshold.

The timing generator may cause the pulse signals during a first half of the second exposure period to be denser than those during a second half of the second exposure period while maintaining a constant total number of pulse signals.

The timing generator may change the density of pulse signals during a first half of the second exposure period in accordance with the brightness while maintaining a constant total number of pulse signals.

The timing generator may cause the pulse signals during the second exposure period to be spaced at equal intervals while maintaining a constant total number of pulse signals.

The timing of the pulse signals generated by the timing generator, or a weighting coefficient applied in the measurement unit, may vary according to position on a sensor element corresponding to an image height of the device.

Further features of the present disclosure will become apparent from the following description of embodiments with reference to the attached drawings.

### BRIEF DESCRIPTION OF THE DRAWINGS

Fig. 1 is a functional block diagram illustrating a schematic configuration example of a photoelectric conversion device according to a first embodiment.
Figs. 2A and 2B are diagrams illustrating a principle according to the present disclosure.
Figs. 3A to 3C are diagrams illustrating a case where exposure illustrated in Figs. 2A and 2B is performed a plurality of times.
Figs. 4A to 4C are diagrams illustrating a principle according to the present disclosure.
Figs. 5A to 5C are diagrams illustrating a principle of weighted driving according to the present disclosure.
Figs. 6A and 6B are diagrams illustrating a principle according to the present disclosure.
Figs. 7A and 7B are diagrams illustrating an example of a control method according to the present disclosure.
Fig. 8 is a diagram illustrating a configuration example of the stacked type photoelectric conversion device according to a first embodiment of the present disclosure.
Fig. 9 is a diagram illustrating a configuration example of a sensor substrate of the photoelectric conversion device according to the first embodiment.
Fig. 10 is a diagram illustrating a configuration example of a circuit substrate of the photoelectric conversion device according to the first embodiment.
Figs. 11A to 11C are diagrams illustrating a pixel circuit and driving of the photoelectric conversion device according to the first embodiment.
Fig. 12 is a driving timing chart illustrating an exposure period and a pulse signal of the photoelectric conversion device according to the first embodiment.
Fig. 13 is a functional block diagram illustrating a configuration example of a photoelectric conversion system and a mobile body according to the first embodiment.
Figs. 14A to 14C are timing charts illustrating an example of a control method when a brightness recognition unit performs bright or dark determination according to the first embodiment.
Figs. 15A to 15C are timing charts illustrating driving timing examples of a photoelectric conversion device according to a second embodiment.
Fig. 16A is a diagram illustrating a configuration example of a mobile body on which a photoelectric conversion system according to a third embodiment is mounted and Fig. 16B is a diagram illustrating a disposition example of a photoelectric conversion system when the front of a vehicle (an imaging range) is imaged.
Fig. 17 is a diagram illustrating a configuration example of a mobile body on which an imaging device including a photoelectric conversion device is mounted according to a fourth embodiment.
Fig. 18 is a diagram illustrating a configuration example of the photoelectric conversion device according to the fourth embodiment.

### DESCRIPTION OF THE EMBODIMENTS

Hereinafter, with reference to the accompanying drawings, example embodiments of the present disclosure will be described. In each diagram, the same reference signs are applied to the same members or elements, and duplicate description will be omitted or simplified.

According to the present disclosure, an improvement in the accuracy of an imaging device is achieved by controlling optimum driving parameters in accordance with an illuminance or light intensity that is a brightness of a surrounding environment and optimizing a measurement range or resolution.

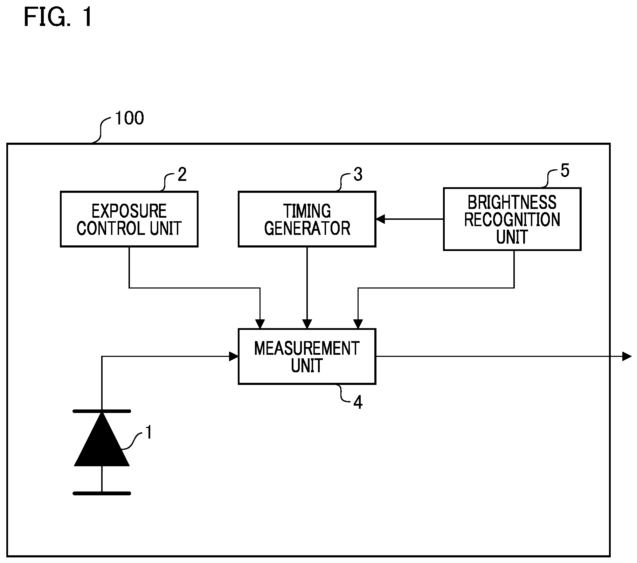

Fig. 1 is a functional block diagram illustrating a schematic configuration example of a photoelectric conversion device 100 according to a first embodiment. The photoelectric conversion device 100 includes a photoelectric conversion unit 1, an exposure control unit 2, a timing generator 3, a measurement unit 4, and a brightness recognition unit 5.

The photoelectric conversion unit 1 detects incident photons and converts the incident photons into electric signals. The photoelectric conversion unit 1 may be a linear mode avalanche photodiode (APD) operated near a breakdown voltage or may be a single photon avalanche photodiode (SPAD) operated in a Geiger mode.

The exposure control unit 2 generates a signal that defines an exposure period (first exposure period) corresponding to one frame. The "exposure period corresponding to one frame" is also referred to as a "one-frame period." The exposure control unit 2 generates a signal that defines an exposure period (second exposure period) corresponding to a plurality of subframes included in an exposure period corresponding to one frame. The "exposure period corresponding to the subframes" is also referred to as a "subframe period."

The timing generator 3 generates a pulse signal that defines time information within a subframe period. That is, the timing generator 3 generates a plurality of pulse signals during a plurality of second exposure periods shorter than the first exposure period corresponding to one frame.

A signal from the photoelectric conversion unit 1, a control signal from the exposure control unit 2, and a control signal from the timing generator 3 are input to the measurement unit 4. The measurement unit 4 measures a numerical value corresponding to a detection time of photons first detected from the start of the subframe period from these signals.

Further, the measurement unit 4 records a count value corresponding to the number of detected photons by adding a weighting coefficient corresponding to the numerical value corresponding to the measured detection time. That is, the measurement unit 4 measures the number of pulse signals after the first detection of the photons during the second exposure period based on the pulse signals generated by the timing generator and measures a count value corresponding to the number of detected photons within the second exposure period in addition to a weighting coefficient.

The weighting coefficient indicates "a total count number added to a counter within a recharge period as a result obtained by receiving the photons in the APD 201 at a timing of interest."

The brightness recognition unit 5 measures or estimates a brightness corresponding to a surrounding environment illuminance of the photoelectric conversion device 100, performs brightness determination based on the acquired brightness information, and controls the timing generator 3 or the measurement unit 4 based on a determination result. That is, a timing of the pulse signal generated by the timing generator 3 or the weighting coefficient added by the measurement unit 4 is controlled in accordance with an output of the brightness recognition unit 5.

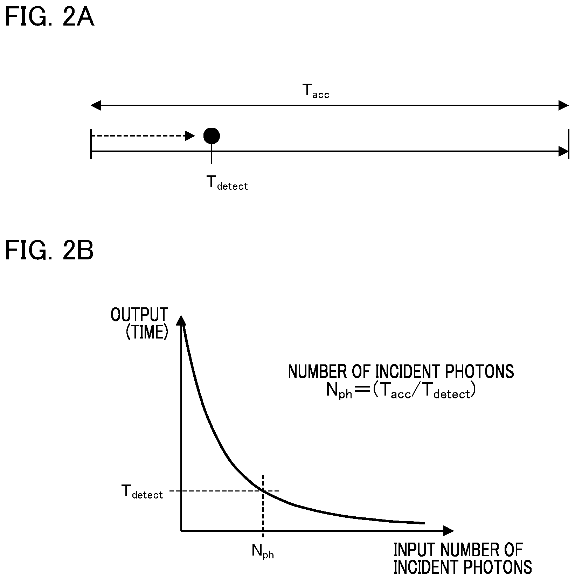

Figs. 2A and 2B are diagrams illustrating a principle according to the present disclosure. Fig. 2A is a diagram illustrating an exposure period and a detection time. Fig. 2B is a diagram illustrating a relationship between a detection time and the number of incident photons.

Here, when Tacc denotes an exposure period and Tdetect denotes a time from start of the exposure period to detection of photons, the number of incident photons Nph incident within the exposure period is expressed as Nph=(Tacc/Tdetect). Accordingly, when the exposure period and the detection time are known, the number of incident photons can be estimated. That is, since the number of incident photons incident during the exposure period can be known without counting the number of incident photons, imaging can be performed.

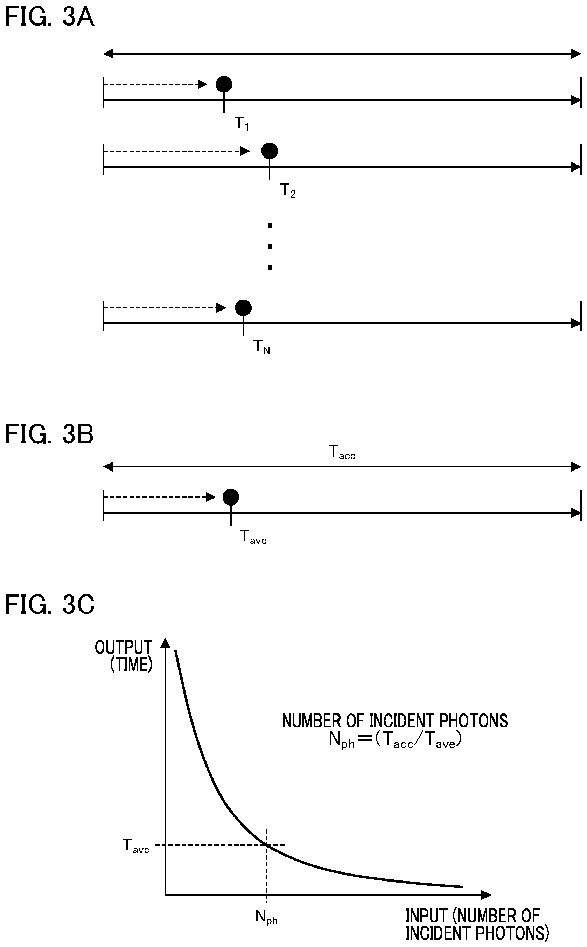

Figs. 3A to 3C are diagrams illustrating a case where exposure illustrated in Figs. 2A and 2B is performed a plurality of times. Here, a measurement period for each time is referred to as a subframe period and it is indicated that a subframe period is repeated N times. The one-frame period is a total sum from one subframe to N subframe. At this time, when Tave denotes an average time in which photons are detected in a subframe during one-frame period, the number of incident photons Nph during one frame can be estimated to be Nph=(Tacc/Tave)×N. Fig. 3C is a diagram illustrating a correspondence relationship between the number of incident photons and an average value of a detection time.

In Figs. 3A to 3C, the description has been made focusing on the average time of the photon detection, but the number of incident photons can be estimated from an integrated time of the photon detection. Further, an averaging or integrating process may be performed within the photoelectric conversion device, or a signal for each subframe may be output out of the photoelectric conversion device to be processed by an external processing circuit.

A relational formula between the number of incident photons and the detection time described above is appropriate when a minimum unit of the detection time is sufficiently smaller than the detection time of photons. However, when the minimum unit of the detection time is substantially the same as the detection time of the photons, an influence can occur. For example, within the minimum unit of the detection time, the assumed number of incident photons can change depending on a timing at which the photons are detected. Thus, an error may occur in the relational formula. Such a situation can be assumed when the detection time is considered to be discrete.

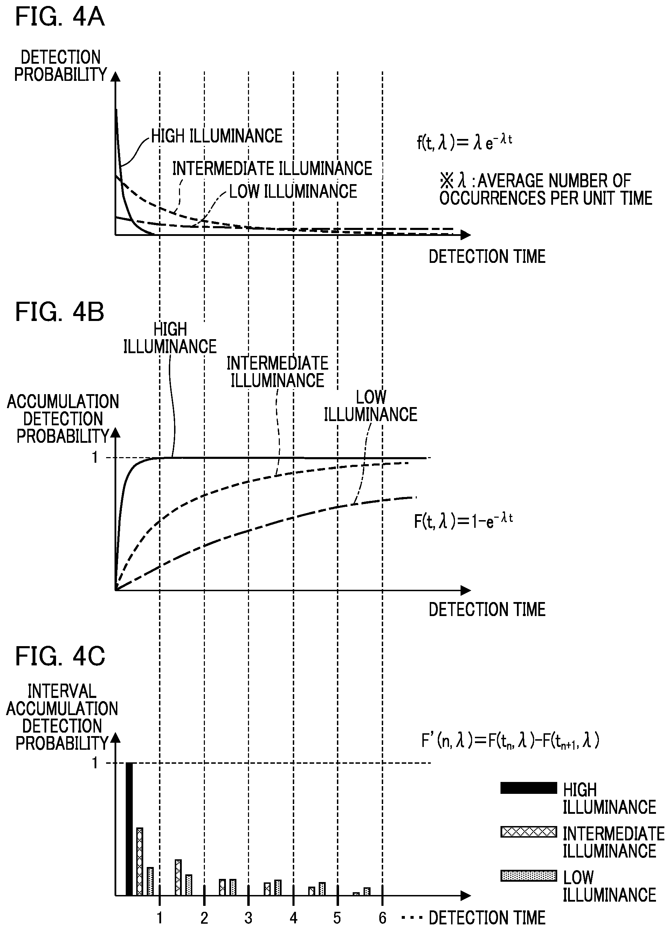

Figs. 4A to 4C are diagrams illustrating a principle according to the present disclosure. Estimation of the number of photons when the detection time is considered to be discrete will be described.

Fig. 4 is a conceptual diagram illustrating a probability of detecting photons. When the detection time is set to 1, 2, ..., a probability of detecting the photons at a certain time is assumed to follow an exponential distribution (f(t,λ)=λe-λt where λ is the number of events per unit time). In the present case, λ is a value determined with the number of incident photons Nph, an exposure time, and a unit time (minimum unit of the detection time). Specifically, λ is (number of incident photons/exposure time)×(unit time). For example, when the number of incident photons is 1, the exposure time is 1000, and the unit time is 1, (1/1000)×1 is obtained and λ is 0.001. According to the exponential distribution, when the horizontal axis is a detection time, a probability of detecting photons can be expressed by a graph illustrated in Fig. 4A. Here, a solid line indicates a high illuminance, a dashed line indicates an intermediate illuminance, and a dot-dash line indicates a low illuminance. The interval accumulation detection probability is expressed as F(t,λ)=1-e-λt and can be expressed by a graph illustrated in Fig. 4B. Further, the interval accumulation detection probability obtained by accumulating detection probabilities in detection intervals (0 to 1, 1 to 2, ...) can be expressed as F'(n,λ)=F(tn,λ)-F(tn+1,λ) and can be expressed by a graph illustrated in Fig. 4C.

By performing such calculation, a probability of detecting photons can be obtained for each detection interval. A total sum (expected value E) of products of the interval accumulation detection probabilities and detection times corresponding thereto can be obtained with the following formula. $E \left(λ\right) = {\sum }_{i = O}^{n} {t}_{i} ⋅ F ′ \left(i, λ\right)$

The expected value E is a value corresponding to Tave illustrated in Fig. 3B.

An expected value of the number of incident photons can be estimated from a detection time based on the probability of detecting the photons. Weighted driving for implementing this will be described. In the weighted driving, the number of incident photons within an exposure period can be estimated from a photon detection timing. Therefore, it is possible to expand a dynamic range more than the number of detected photons.

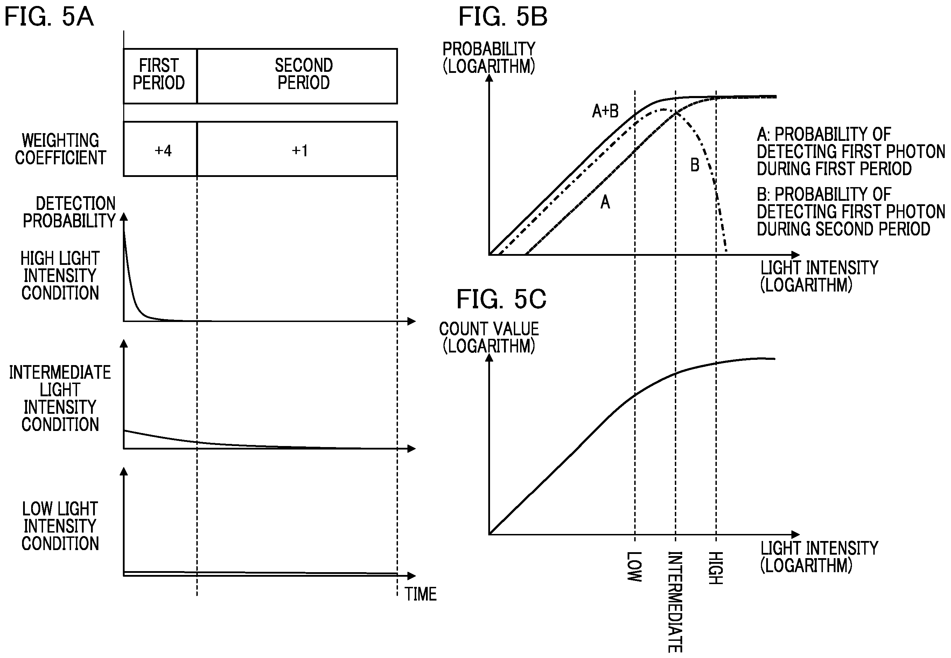

A principle of the weighted driving will be described with reference to Fig. 5. Figs. 5A to 5C are diagrams illustrating a principle of weighted driving according to the present disclosure. Fig. 5A is a diagram illustrating an example of a probability of detecting a first photon for a time under each light intensity condition and a weighting coefficient during each period. Fig. 5B is a graph illustrating a probability of detecting photons with respect to a light intensity. Fig. 5C is a graph illustrating a count number of photon detection signals with respect to a light intensity. Here, a photon first detected within each detection period is referred to as a first photon.

As illustrated in Fig. 5A, under a high light intensity condition, a probability of detecting the first photons is higher at earlier times, and the probability decreases as time passes. When the first half of a detection period is a first period and the second half of the detection period is a second period, a probability of completing the detection of the first photon during the first period is high. Under an intermediate light intensity condition, the probability of detecting photons decreases as time passes. However, compared with the case of the high light intensity, time dependence of the probability of detecting the first photon is low and there is a possibility of detecting the first photon even in the second period. Under a low light intensity condition, the probability of detecting the first photon is almost independent of time.

In Fig. 5B, a dashed line A indicates a probability of detecting the first photon during the first period at each light intensity, and a dashed line B indicates a probability of detecting the first photon during the second period at each light intensity. A straight line A+B that is addition of the dashed lines A and B indicates a probability of detecting the first photon at each light intensity regardless of the period.

As indicated by the dashed line A, during the first period, as the light intensity increases, a probability of detecting a photon increases and eventually saturates under the high light intensity condition. In particular, from the low light intensity condition to the intermediate light intensity condition, the probability increases as a power function with respect to the increase in light intensity. On the other hand, as indicated by the dashed line B, from the low light intensity condition to the intermediate light intensity condition in the second period, as the light intensity increases, the probability of detecting the photons increases. From the intermediate light intensity condition to the high light intensity condition, the probability of detecting the photon decreases. This is because, under the high light intensity condition, the first photon is detected during the first period in many cases and a photon detected during the second period is a photon incident after the first photon. The probability of detecting the first photon at each light intensity increases as the light intensity increases from the intermediate light intensity condition to the intermediate light intensity condition, as indicated by the straight line A+B that is the addition of the dashed lines A and B, and thus converges to a constant value from the intermediate light intensity condition to the high light intensity condition.

Fig. 5C illustrates a graph of a count value at each light intensity. Similarly to the probability of detecting the first photon illustrated in Fig. 5B, photons after a second photon are incident on the APD. That is, from the low light intensity condition to the intermediate light intensity condition, a photon count number increases as the light intensity increases. From the intermediate light intensity condition to the high light intensity condition, a photon count number saturates as the light intensity increases.

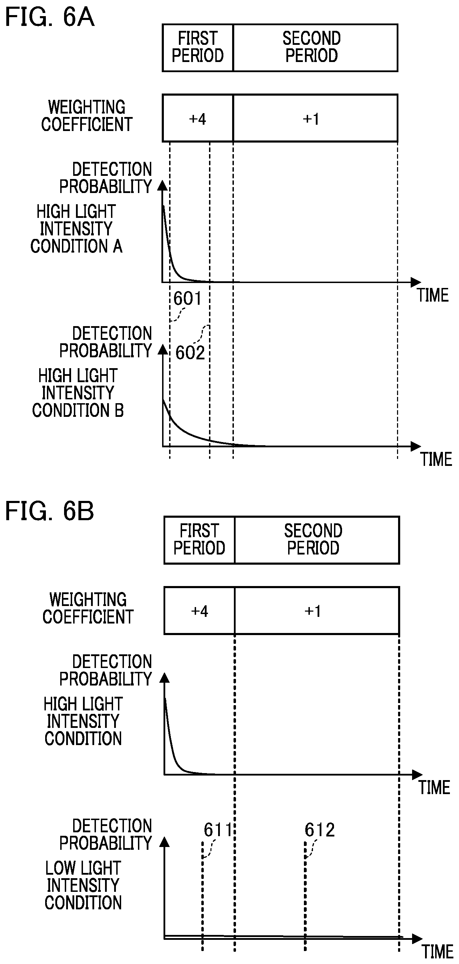

Figs. 6A and 6B are diagrams illustrating a principle according to the present disclosure and diagrams illustrating a case where an insufficient dynamic range or a measurement error occurs because the measurement range becomes appropriate under the high light intensity condition or the low light intensity condition (e.g., the relatively higher or lower light intensity conditions).

As described above, a period is divided into first and second periods and corresponding weighting coefficients are set. Fig. 6A illustrates detection probabilities of high light intensity conditions A and B with different light intensities. The light intensity satisfies high light intensity condition A > high light intensity condition B.

In this case, in the case of detection at timing 601 and the case of detection at timing 602, the weighting coefficient +4 is recorded for both the high light intensity conditions A and B at any timing. That is, a difference in detection probability depending on the light intensity illustrated in the graph of the detection probability is not measured. In other words, due to the insufficient measurement range, a difference in high light intensity condition A > high light intensity condition B may not be measured.

Under the low light intensity condition illustrated in Fig. 6B, despite a small difference in the detection probability in accordance with a measurement timing, the weighting coefficient +4 is measured at timing 611 and the weighting coefficient +1 is measured at timing 612. This is regarded as a measurement error because the measurement range is not appropriate.

Accordingly, in the present disclosure, a measurement range is controlled appropriately by measuring a brightness of a scene corresponding to a surrounding environment illuminance of a device and controlling a pulse signal within a subframe interval or a count value that is a weighting coefficient based on measured brightness information.

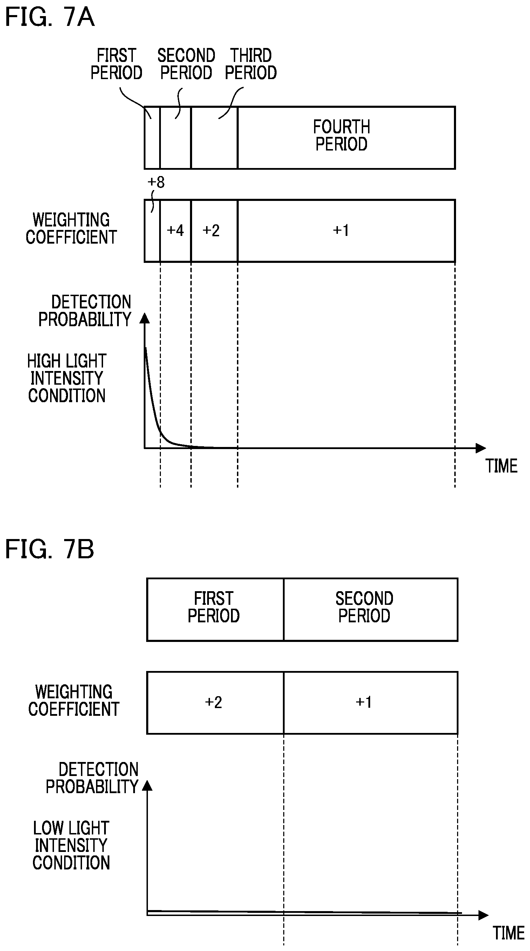

Figs. 7A and 7B are diagrams illustrating an example of a control method according to the present disclosure. Fig. 7A illustrates an example of a control method when the brightness recognition unit 5 performs determination under a high light intensity condition. The number of timing pulses within the subframe interval controlled by the timing generator 3 is increased and a period corresponding to the detection timing within the subframe interval is increased.

A maximum value of the weighting coefficient recorded by the measurement unit 4 is increased. In this way, a resolution and a weight of the value of the weighting coefficient in an early period of time within the subframe interval can be increased to expand the dynamic range.

Fig. 7B illustrates an example of a control method when the brightness recognition unit 5 performs determination under a low light intensity condition. The number of timing pulses within the subframe interval controlled by the timing generator 3 is decreased and a period corresponding to the detection timing within the subframe interval is decreased.

A maximum value of the weighting coefficient recorded by the measurement unit 4 is decreased. In this way, a difference in measured value by a difference in detection timing within the subframe interval can be alleviated, and thus a measurement error under the low light intensity condition can be reduced.

Next, detailed examples of a specific device and a circuit configuration, and further an operation or a control method for implementing control of weighted count driving based on the surrounding brightness information according to the present disclosure will be described.

### First Embodiment

In an embodiment to be described below, a weighted count operation is performed in a configuration in which a weighting coefficient is changed in accordance with a photon detection timing. Accordingly, it is possible to perform the weighted count operation while inhibiting an increase in the circuit size of a pixel circuit.

A maximum count value can be increased while inhibiting the number of times photons are detected through the weighted count operation according to the present embodiment and a dynamic range can be expanded, which can improve accuracy.

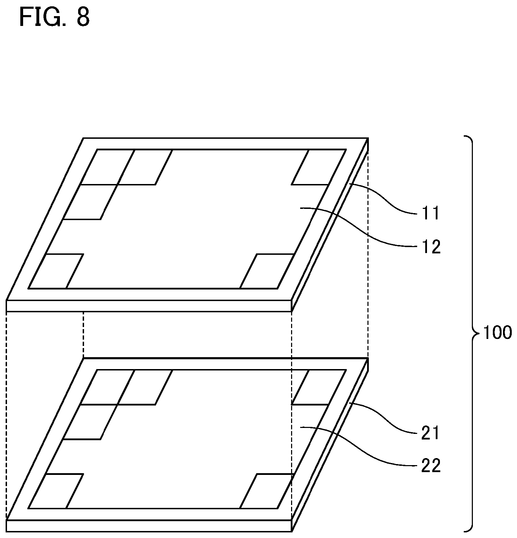

Fig. 8 is a diagram illustrating a configuration example of a stacked type photoelectric conversion device according to the first embodiment of the present disclosure. The photoelectric conversion device 100 is configured such that two substrates of a sensor substrate 11 and a circuit substrate 21 are stacked and electrically connected. A pixel region 12 is disposed in the sensor substrate 11, and a circuit region 22 where a signal detected in the pixel region 12 is processed is disposed in the circuit substrate 21.

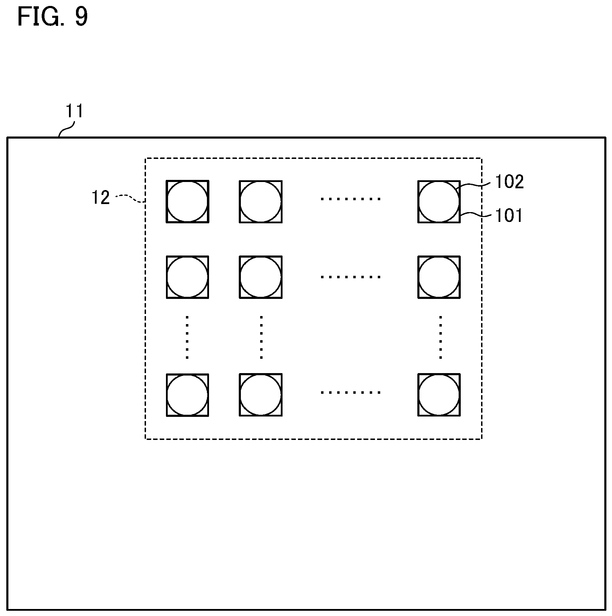

Fig. 9 is a diagram illustrating a configuration example of the sensor substrate 11 of the photoelectric conversion device according to the first embodiment. The pixel region 12 is formed such that pixels 101 that each have a photoelectric conversion unit 102 including an avalanche photodiode (hereinafter referred to as an APD) are arranged in an array form of a plurality of rows and a plurality of columns.

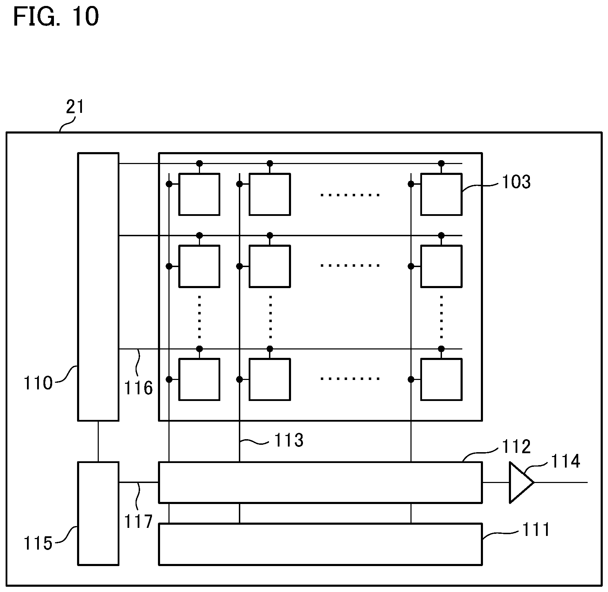

Fig. 10 is a diagram illustrating a configuration example of the circuit substrate 21 of the photoelectric conversion device according to the first embodiment. The circuit substrate 21 includes a signal processing unit 103 that processes charges photoelectrically converted by the photoelectric conversion unit 102 in Fig. 9, a reading circuit 112, a control pulse generation unit 115, a horizontal scanning circuit unit 111, an output line 113, and a vertical scanning circuit unit 110.

The photoelectric conversion unit 102 in Fig. 9 and the signal processing unit 103 in Fig. 10 are electrically connected via a connection wiring provided for each pixel.

The vertical scanning circuit unit 110 receives a control pulse supplied from the control pulse generation unit 115 and supplies a control pulse to each pixel. A logical circuit such as a shift register or an address decoder is used for the vertical scanning circuit unit 110.

A signal output from the photoelectric conversion unit 102 of each pixel is processed by the signal processing unit 103. In the signal processing unit 103, a counter, a memory, or the like is provided and a digital value is retained in the memory.

The horizontal scanning circuit unit 111 inputs a control pulse for sequentially selecting each column to the signal processing unit 103 in order to read a signal from the memory of each pixel in which the digital signal is retained.

For the selected column, a signal is output to the output line 113 from the signal processing unit 103 of the pixel selected by the vertical scanning circuit unit 110.

The signal output to the output line 113 is output to an external recording unit or a signal processing unit of the photoelectric conversion device 100 via the reading circuit 112 and the output circuit 114.

In Fig. 9, the pixels in the pixel region 12 are arranged in a 2-dimensional array form, but the present disclosure is not limited thereto. For example, the pixels 101 in the pixel region 12 may be disposed in a 1-dimensional form. Functions of the signal processing unit 103 may not be necessarily provided on a one-per pixel basis for all the pixels 101. For example, one signal processing unit 103 may be shared by a plurality of pixels 101 to perform signal processing in sequence.

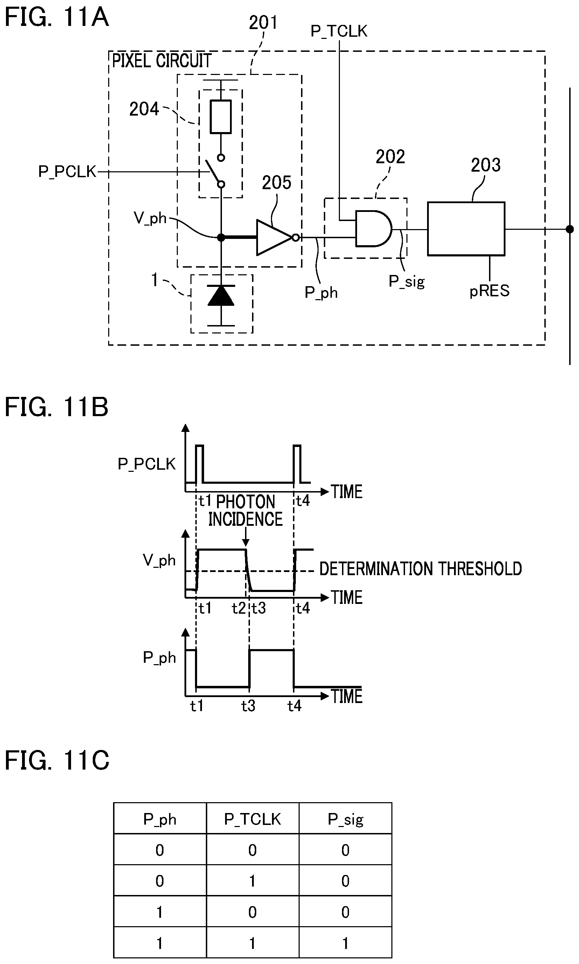

Figs. 11A to 11C are diagrams illustrating a pixel circuit and driving of the photoelectric conversion device according to the first embodiment. Fig. 11A illustrates one example of a configuration of the pixel circuit. The photoelectric conversion unit 1 is an APD and generates a charge pair in accordance with incident light through photoelectric conversion.

A voltage VL (first voltage) is supplied to an anode of the photoelectric conversion unit 1. A voltage VH (second voltage) higher than the voltage VL supplied to the anode is supplied to a cathode of the photoelectric conversion unit 1.

A reverse bias voltage (a voltage equal to or greater than a breakdown voltage) at which the photoelectric conversion unit 1 performs an avalanche multiplication operation is supplied to the anode and the cathode. By keeping such a voltage in a supply state, charges generated by incident light cause avalanche multiplication, and thus an avalanche current is generated. In this way, the photoelectric conversion unit according to the present embodiment generates a photon detection signal through the avalanche multiplication.

When the reverse bias voltage is supplied, there are modes including a Geiger mode in which an operation is performed at a potential difference between the anode and the cathode greater than a breakdown voltage and a linear mode in which an operation is performed at a potential difference between the anode and the cathode near or equal to or less than the breakdown voltage.

The ADP operating in the Geiger mode is referred to as an SPAD. For example, the voltage VL (first voltage) is -30 V and the voltage VH (second voltage) is 1 V. The APD may operate in the linear mode or the Geiger mode.

A signal processing circuit 201 includes a quenching element 204 and a waveform shaping circuit 205. The quenching element 204 is connected to the photoelectric conversion unit 1 and a power supply that supplies the voltage VH.

The quenching element 204 functions as a load circuit (quenching circuit) during signal multiplication through the avalanche multiplication and has a function of inhibiting a voltage to be supplied to the photoelectric conversion unit 1 and inhibiting the avalanche multiplication (quenching operation).

The quenching element 204 has a function of returning a voltage supplied to the photoelectric conversion unit 1 to the voltage VH by flowing a current corresponding to a voltage drop in the quenching operation (recharge operation). Fig. 11A illustrates an example in which a switch such as a transistor is disposed between the power supply and the photoelectric conversion unit 1 to switch electric connection.

A resistor of the quenching element 204 may be a wiring resistor or a resistor may be omitted from an equivalent circuit diagram.

The waveform shaping circuit 205 shapes a potential change of the cathode of the photoelectric conversion unit 1 obtained during photon detection and outputs a pulse signal. For example, an inverter circuit is used as the waveform shaping circuit 205.

Figs. 11A to 11C illustrate an example in which one inverter is used as the waveform shaping circuit 205, but a circuit in which a plurality of inverters are connected in series may be used or another circuit that has a waveform shaping effect may be used.

A timing determination circuit 202 is connected between the waveform shaping circuit 205 and the counter 203 and counts photon detection signals output from the photoelectric conversion unit 1. A signal output from the waveform shaping circuit 205 and P_TCLK supplied from the outside of the pixel are input to the timing determination circuit 202, and a signal is output to the counter 203 in accordance with a combination of the signals. The timing determination circuit 202 is configured with, for example, an AND circuit.

Fig. 11B illustrates a relationship between P_PCLK, V_ph (a cathode potential of the photoelectric conversion unit 1), and P_ph (an output from the waveform shaping circuit 205 in clock recharge driving. When P_PCLK transitions from an L level to an H level at time t1 and a switch turns on, a terminal on the cathode side of the photoelectric conversion unit 1 is electrically connected to a power supply voltage and a reverse bias is applied to the photoelectric conversion unit 1.

That is, when P_PCLK becomes the H level and the switch turns on, the photoelectric conversion unit 1 enters a charge mode. Since the charge mode is repeated a plurality of times, this mode is referred to as a recharge mode. When a reverse bias is applied, the cathode potential V_ph rises. When the cathode potential V_ph exceeds a determination threshold, the output P_ph transitions from the H level to the L level.

Thereafter, P_PCLK transitions from the H level to the L level and the photoelectric conversion unit 1 enters a standby mode in which photon incidence is awaited. When a photon is incident at time t2, the cathode potential V_ph drops. When the cathode potential V_ph falls below the determination threshold at time t3, the output P_ph transitions from the L level to the H level.

Thereafter, P_PCLK transitions again from the L level to the H level at time t4, the switch turns on and the above operation is repeated.

Through the clock recharge driving, at least one output signal can be counted even when many photons are incident in the standby mode. Therefore, this driving is effective as pile-up countermeasures.

Fig. 11C is a true table illustrating a relationship of an output P_sig to inputs P_ph and PTCLK to the timing determination circuit 202. Here, 0 represents the L level and 1 represents the H level. Since the timing determination circuit 202 is configured with an AND circuit, the output P_sig enters the H level only when both the inputs P_ph and P_TCLK are at the H level.

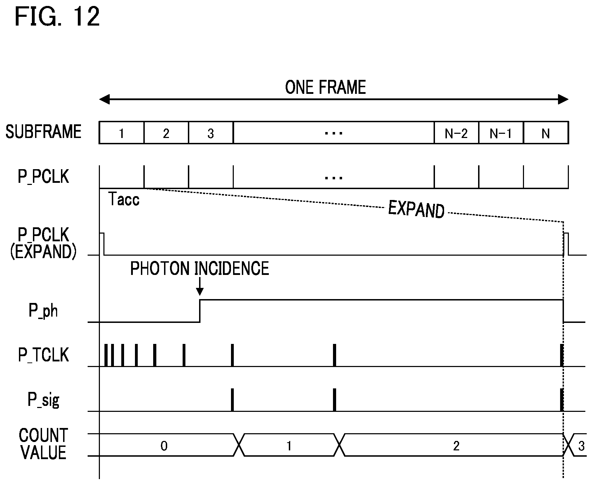

Fig. 12 is a driving timing chart illustrating an exposure period and a pulse signal of the photoelectric conversion device according to the first embodiment. A one-frame period includes N subframes. Start and end of a subframe are defined by P_PCLK.

M pulses of P_TCLK are included in one subframe and are input to the timing determination circuit 202 so that the pulse signal P_TCLK with the same period pattern is repeated for each subframe.

In the example illustrated in Fig. 12, P_TCLK is at unequal intervals and is at an interval substantially proportional to a logarithm. However, P_TCLK may be at an equal interval. P_TCLK may be a pulse at an unequal interval substantially proportional to a reciprocal.

Fig. 12 illustrates an actualized concept of Figs. 3A to 3C described above. The pulse of P_PCLK serves as a start point of a subframe and an interval of the subframe is Tacc.

When the photons are incident, P_ph transitions from the L level to the H level. When the pulse of P_PCLK is input, P_ph transitions from the H level to the L level through a recharge operation of the photoelectric conversion unit 1. P_TCLK is a pulse signal for defining time information in the subframe.

Since the timing determination circuit 202 described in Figs. 11A to 11C is configured with an AND circuit, the number of P_TCLK after a timing at which a photon is first detected within the subframe becomes a counted value. Accordingly, a signal input to the counter becomes P_sig and 3 is counted in the counter.

The count value corresponds to incidence of a photon between third and fourth pulse signals P_TCLK from the right within the subframe. In this way, when a photon is incident at the beginning of the subframe, the count value of the counter becomes a large value. When a photon is incident at the end of the subframe, the count value of the counter becomes a small value.

That is, based on P_TCLK, a numerical value corresponding to a time from start of the subframe to first detection of the photon can be measured.

By repeating the counting N times and adding the count values, it is possible to obtain a count value corresponding to an expected value E' of a detection time. Accordingly, as described above, the number of incident photons can be estimated from the expected value E'.

According to the present configuration, the number of incident photons within an exposure period can be estimated from the photon detection timing. Therefore, it is possible to expand the dynamic range beyond the number of detected photons. Since the length of a subframe period can be set by the exposure control unit 2, adjustment can be performed such that the counter 203 does not saturate during the one-frame period.

Therefore, by avoiding stop of the counter 203 during the one-frame period while ensuring the dynamic range, it is possible to prevent a loss of signal information.

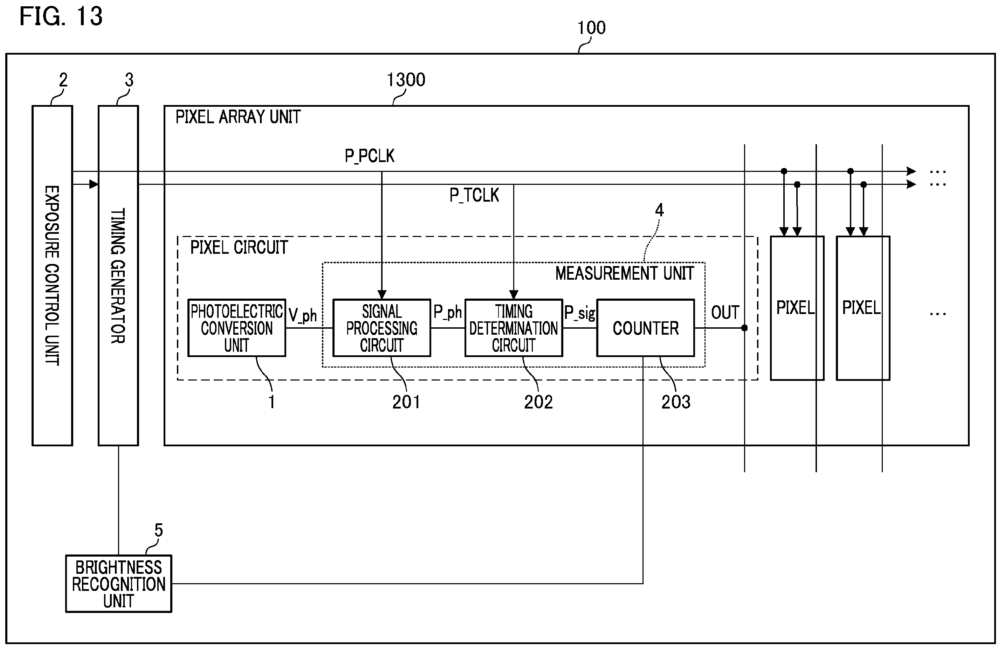

Fig. 13 is a functional block diagram illustrating a configuration example of a photoelectric conversion system and a mobile body according to the first embodiment and illustrates one example of a block configuration of a pixel array unit 1300, the timing generator 3, the measurement unit 4, and the like. The exposure control unit 2 and the timing generator 3 can be included in the vertical scanning circuit unit 110 or the control pulse generation unit 115 illustrated in Fig. 10. The pixel circuit includes the photoelectric conversion unit 1 and the measurement unit 4.

The measurement unit 4 includes the signal processing circuit 201, the timing determination circuit 202, and the counter 203. The signal processing circuit 201 is, for example, a waveform shaping circuit or a resistor or switch provided between the photoelectric conversion element and a voltage applied thereto.

The signal processing unit 103 illustrated in Fig. 10 corresponds to the measurement unit 4 (the signal processing circuit 201, the timing determination circuit 202, and the counter 203) illustrated in Fig. 13.

The pulse signal P_PCLK is output from the exposure control unit 2 and is input to the signal processing circuit 201. The pulse signal P_TCLK is output from the timing generator 3 and is input to the timing determination circuit 202.

The brightness recognition unit 5 acquires brightness information corresponding to a surrounding environment illuminance of the photoelectric conversion device 100 and performs brightness determination based on the acquired brightness information. The control by the timing generator 3 based on a result of the brightness determination or control of a count value that is a weighting coefficient counted by the measurement unit 4 is performed. Accordingly, it is possible to achieve optimization of a measurement range in accordance with illuminance or a reduction of a measurement error.

The brightness recognition unit 5 includes a memory unit that temporarily stores captured image data and a calculation unit that performs brightness determination. Image data captured before imaging control of the photoelectric conversion device 100, more specifically, captured data from one frame before is stored in the memory unit, read, and processed by the calculation unit.

In the calculation of the brightness information, a signal value is acquired for each pixel of the read image data, the acquired signal values are averaged in the in-plane direction of the pixels to acquire an average value, and the acquired average value of the acquired signal values is set as brightness information.

The brightness determination is performed by comparing a predetermined threshold with the average value of the signal values acquired as described above. That is, the brightness recognition unit 5 performs the brightness determination by comparing a surrounding brightness with a predetermined threshold.

Specifically, for example, lave denotes the average value of the acquired signal values, Ith_h denotes a high light intensity condition threshold for bright determination, and lth_l denotes a low light intensity threshold for dark determination. When lave>lth_h, bright determination is made. When lave<lth_l, dark determination is made.

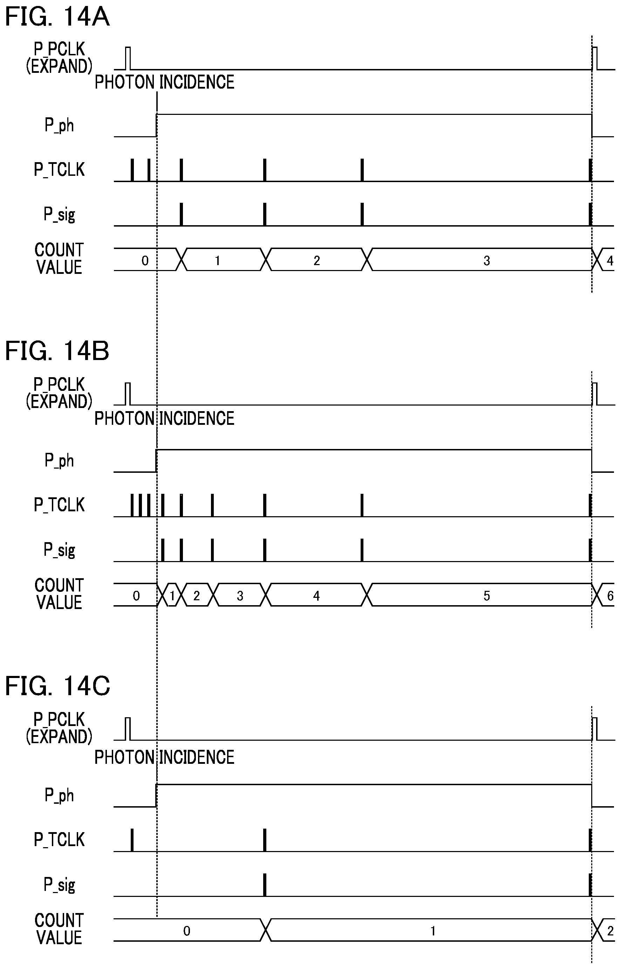

Figs. 14A to 14C are timing charts illustrating an example of a control method when the brightness recognition unit 5 performs bright or dark determination according to the first embodiment. Fig. 14A illustrates an example of a timing chart during initial setting control, Fig. 14B illustrates an example of a timing chart during control under a high light intensity condition for bright determination, and Fig. 14C illustrates an example of a timing chart during control under a low light intensity condition for dark determination.

As in Fig. 12, Fig. 14A to Fig. 14C illustrate P_PCLK defining start and end of a subframe, P_TCLK defining time information during the subframe, and P_ph transitioning to the H level when a photon is incident and transitioning to the L level when one subframe ends.

P_sig corresponds to the number of P_TCLK after a timing at which a photon is first detected within a subframe and is a signal input to the counter, and the count value indicates the number of P_sig.

In the present embodiment, as illustrated in Fig. 14B, the timing generator increases the number of pulse signal within a second exposure period when the brightness recognition unit 5 performs determination under the high light intensity condition. In a case where the brightness recognition unit determines the surrounding brightness is higher than a predetermined threshold, P_TCLK in the first half of a subframe interval defined by P_TCLK, that is, an early period of time within the subframe interval, is increased.

Specifically, one P_TCLK is inserted at intervals of four pulses until a fourth pulse of P_TCLK of the initial setting illustrated in Fig. 14A. Accordingly, a count value of 6 is recorded.

By doing so, even when a photon is incident at a timing defined by the earliest P_TCLK, the count value can reach a maximum of 8 to be recorded, and thus it is possible to obtain the effect of expanding a measurement range, that is, a dynamic range.

A method of controlling P_TCLK is not limited to the above-described scheme. An earlier period of time of a subframe interval defined by P_TCLK may be divided more finely with P_TCLK, which can expand the dynamic range.

On the other hand, in a case where the brightness recognition unit determines the surrounding brightness is lower than a predetermined threshold, as illustrated in Fig. 14C, the timing generator decreases the number of pulse signals within the second exposure period.

That is, control is performed to decrease P_TCLK within the subframe interval defined by P_PCLK. Specifically, P_TCLK other than the first and fourth of P_TCLK of the initial setting illustrated in Fig. 14A is deleted.

Accordingly, the count value of 2 is recorded. A difference in the count value in accordance with a measurement time, that is, the weighting coefficient, is reduced, which can achieve a reduction of a measurement error under the low light intensity condition.

In this way, in the present embodiment, under the low light intensity condition, control is performed to alleviate an influence of the difference in the count value in accordance with the measurement time within the subframe interval by reducing the number of P_TCLK within the subframe interval.

The brightness information used by the brightness recognition unit 5 is not limited to the above-described average value, and a value based on various statistical values of signal values for each pixel obtained from an acquired frame may be set as brightness information.

That is, a statistical value such as a median or a mode may be used instead of the average value. That is, the brightness recognition unit 5 may determine a brightness based on a statistical value of pixel signal values of past frame images. The statistical value may be calculated after removing an outlier.

Alternatively, a region of interest (ROI) may be set within an image of an acquired frame and statistical processing may be performed using a pixel value in the ROI. That is, the brightness recognition unit may determine a brightness based on a pixel signal value in the region of interest of an acquired frame image.

Further, for the signal value of each pixel obtained from the acquired frame, signal threshold determination may be determined on a signal determination set value and brightness determination may be performed based on the number of pixels having signal values greater than the signal threshold.

Specifically, for the number of pixels having signal values greater than the above-described signal threshold, threshold determination may be further performed on a number-of-pixels determination threshold, and brightness determination may be performed when a signal value equal to or greater than a predetermined brightness is large.

Conversely, the number of pixels less than the predetermined signal threshold may be measured. When the number of pixels is less than the predetermined number-of-pixels threshold, a brightness may be determined. By recombining various conditions, it is possible to shift determination under the high light intensity condition and the low light intensity condition.

An illuminance meter may be included as a unit that acquires brightness information and a value of the illuminance meter may be set as brightness information. That is, the brightness recognition unit 5 may determine a brightness based on illuminance information acquired from another measurement instrument. Current brightness information may be estimated based on information regarding a count value or a weighting coefficient that is a measured value of a past frame.

A surrounding environment illuminance of a device may be estimated based on various types of positional information of Global Positioning System (GPS) or the like, map information, a measurement time, weather information, or the like, and the surrounding environment illuminance may be set as brightness information. That is, the brightness recognition unit 5 may determine a brightness based on positional information acquired from a measurement instrument.

In this way, according to the first embodiment, in the photoelectric conversion device performing weighted count driving, control of optimum driving parameters can be performed in accordance with illuminance or a light intensity of a surrounding environment, and thus it is possible to improve accuracy of the device by optimizing a measurement range or a resolution.

When the brightness recognition unit 5 performs determination under the high light intensity condition, the measurement unit 4 may perform control such that the value of the weighting coefficient increases. When the brightness recognition unit 5 performs determination under the low light intensity condition, the measurement unit 4 may perform control such that the value of the weighting coefficient decreases.

### Second Embodiment

In a second embodiment, a method of maintaining a constant data depth of an acquired image by changing control parameters in accordance with a surrounding environment brightness will be described. According to the method of the second embodiment, since stored data of the acquired image has a constant data depth is appropriate from the viewpoints of data handling and cost.

A data depth L per acquired image is expressed as L=M×N using the number of recharge driving operations M per frame and a maximum value N of a value of a count value or a weighting coefficient. Specifically, on the assumption that the number of recharge driving operations is 2048 and the maximum value of the count value is 8, 2048×2^14 is obtained and the data depth per acquired image is 14 bits.

In the second embodiment, in accordance with the brightness of a surrounding environment, control is performed to change P_TCLK defining a timing within the subframe interval or control is performed to change the count value or the value of the weighting coefficient, and the number of recharge driving operations is not changed. Accordingly, control is performed to change a position of P_TCLK defining a timing so that the maximum value of the weighting coefficient or the count value becomes constant.

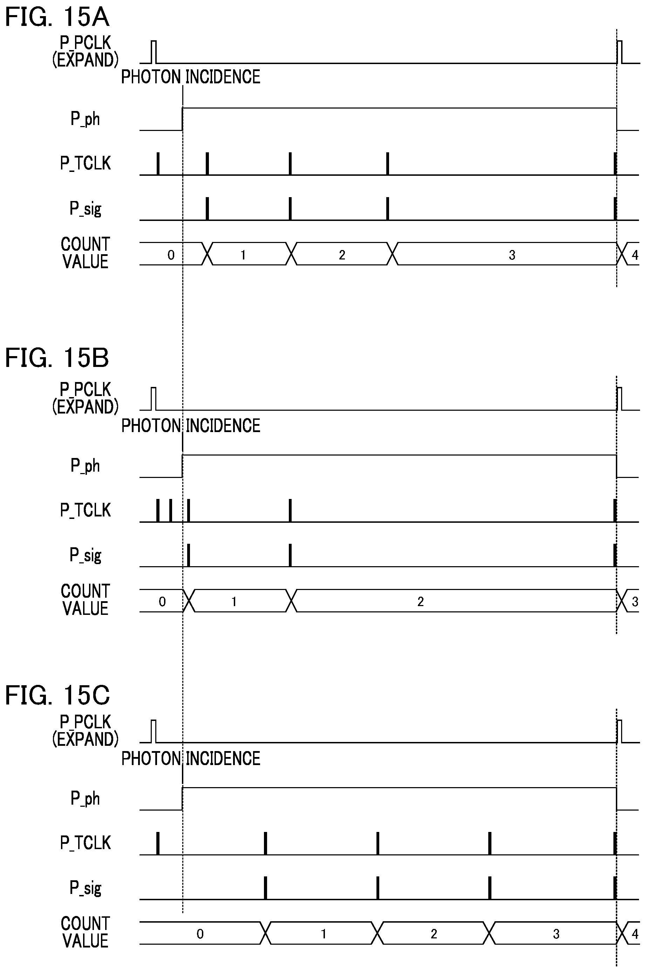

Figs. 15A to 15C are timing charts illustrating driving timing examples of the photoelectric conversion device according to the second embodiment. A configuration of the photoelectric conversion device according to the second embodiment is similar to that of Fig. 1.

Fig. 15A illustrates control of an initial state. Since each subframe interval is divided into timing intervals by four P_TCLK pulse signals, the maximum value of the count value is 4.

Fig. 15B illustrates a control example when the brightness recognition unit 5 performs determination under the high light intensity condition (e.g., here light intensity conditions than the conditions of Fig. 15A). Control is performed to increase the number of pulse signals immediately after the recharge driving operation and decrease the number of pulse signals in the second half of the subframe interval without changing the number of P_TCLK pulse signals within the subframe interval. That is, the brightness recognition unit makes the pulse signals in the first half of the second exposure period denser than in the second half of the second exposure period while maintaining a constant total number of pulse signals within the second exposure period.

Since the maximum value of the count value that is 4 is constant, the data depth per acquired image is not changed. Since the measured count value is 3 in Fig. 15B even at a photon incidence timing similar to that of Fig. 15A, this corresponds to expansion of the measurement dynamic range to a bright side.

Fig. 15C illustrates a control example when the brightness recognition unit 5 performs determination under the low light intensity condition (e.g., lower light intensity conditions than the conditions of Fig. 15B). Control is performed to divide the number of pulse signals evenly, that is, at an equal interval, within the subframe interval without changing the number of P_TCLK pulse signals within the subframe interval. That is, the pulse signals in the second exposure period are arranged at an equal interval while maintaining a constant total number of pulse signals within the second exposure period.

Since the maximum value of the count value that is 4 is constant, the data depth per acquired image is not changed. In Fig. 15C, an interval in which a maximum value of 4 or a large value is measured is expanded within the subframe interval, which corresponds to a shift of a measurement dynamic range to a lower light level.

In the example illustrated in Fig. 15A, a detection probability under the low light intensity condition is a detection probability that has a small change in accordance with a photon incidence timing, in other words, has a small time dependence whereas, in the control of Fig. 15C, the time dependence can be made small by dividing the interval into uniform intervals. Accordingly, it is possible to improve a resolution.

In the example illustrated in Fig. 15C, the pulse signals in the first half of the second exposure period are sparser than in the example illustrated in Fig. 15B while maintaining the constant total number of pulse signals within the second exposure period. That is, the density of the pulse signals in the first half of the second exposure period may change in accordance with the brightness while maintaining the constant total number of pulse signals within the second exposure period.

### Third Embodiment

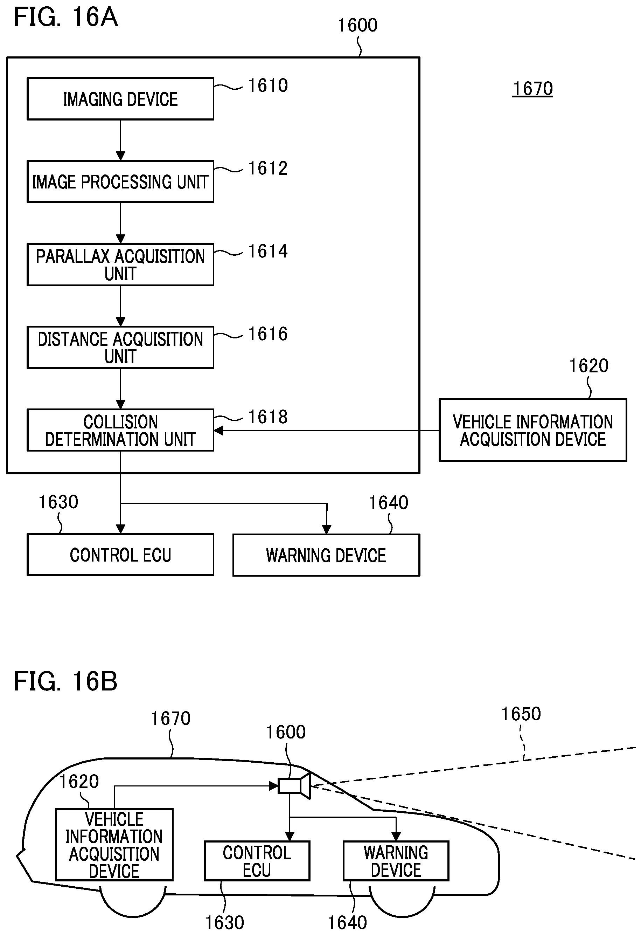

Fig. 16A is a diagram illustrating a configuration example of a mobile body 1670 on which a photoelectric conversion system 1600 according to a third embodiment is mounted. The photoelectric conversion system 1600 includes an imaging device 1610. The imaging device 1610 is a photoelectric conversion device according to any of the above embodiments.

The photoelectric conversion system 1600 includes an image processing unit 1612 that performs image processing on a plurality of pieces of image data acquired by the imaging device 1610. The photoelectric conversion system 1600 includes a parallax acquisition unit 1614 that calculates a parallax (a phase difference of a parallax image) from the plurality of pieces of image data acquired by the photoelectric conversion system 1600.

Further, the photoelectric conversion system 1600 includes a distance acquisition unit 1616 that calculates a distance to a target based on the calculated parallax and a collision determination unit 1618 that determines whether there is a collision possibility based on the calculated distance.

Here, the parallax acquisition unit 1614 or the distance acquisition unit 1616 is an example of a distance information acquisition unit that acquires distance information to a target. Instead of a phase difference, for example, distance information may be acquired using, for example, a time of flight (TOF) technique.

The collision determination unit 1618 determines the collision possibility using any of the distance information. The distance information acquisition unit may be implemented by hardware designed only therefor or may be implemented by a software module.

The distance information acquisition unit may also be implemented by a field programmable gate array (FPGA), an application specific integrated circuit (ASIC), or the like or may be implemented by a combination of the two.

The photoelectric conversion system 1600 is connected to a vehicle information acquisition device 1620 and can acquire vehicle information such as a vehicle speed, a yaw rate, or a steering angle. The photoelectric conversion system 1600 is connected to a control ECU 1630 that is a control device (control unit) outputting a control signal for generating a braking force for a vehicle based on a determination result by the collision determination unit 1618.

The photoelectric conversion system 1600 is also connected to a warning device 1640 that issues a warning to a driver based on a determination result by the collision determination unit 1618. For example, when a collision possibility is high as a determination result of the collision determination unit 1618, the control ECU 1630 performs vehicle control for avoiding a collision or reducing damage by applying a brake, releasing an accelerator, inhibiting an engine output, or the like.

The warning device 1640 issues a warning using a sound, an image, or the like based on an output (for example, an obstacle or the like) of the photoelectric conversion device. The warning device 1640 warns a user by displaying an image or alarm information based on the output of the photoelectric conversion device on a display unit of a car navigation system or the like or applying vibration to a seat belt or a steering wheel.

In the present embodiment, surroundings of a vehicle, for example, the front or rear is imaged by the photoelectric conversion system 1600. Fig. 16B is a diagram illustrating a disposition example of the photoelectric conversion system when the front of the vehicle (an imaging range 1650) is imaged.

The vehicle information acquisition device 1620 transmits an instruction for ranging or imaging to the photoelectric conversion system 1600 or the imaging device 1610. With such a configuration, it is possible to further improve accuracy of ranging.

While the example in which the control is performed to avoid a collision with another vehicle has been described above, the configuration can also be applied to control for tracking another vehicle and performing autonomous driving, control for performing autonomous driving so as not to deviate from a lane, or the like.

Further, the photoelectric conversion system is not limited to a vehicle such as an own vehicle, but may be applied to a mobile body (mobile device) such as a ship, an aircraft, or an industrial robot. Furthermore, the photoelectric conversion system is not limited to a mobile body, but can be applied to a device such as an intelligent transport system (ITS) used to widely recognize an object.

### Fourth Embodiment

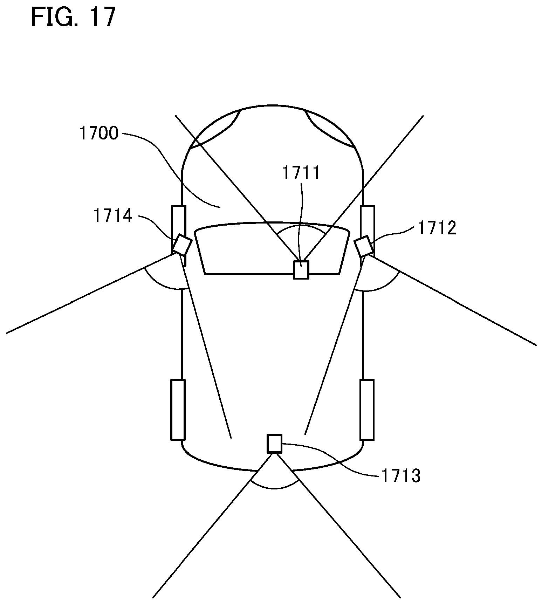

A photoelectric conversion device, an imaging device, and a mobile body according to a fourth embodiment will be described with reference to Fig. 17. Fig. 17 is a diagram illustrating a configuration example of a mobile body 1700 on which an imaging device including a photoelectric conversion device is mounted according to the fourth embodiment.

In the mobile body 1700, imaging devices 1711, 1712, 1713, and 1714 including the photoelectric conversion device described in any of the first to third embodiments are mounted. The imaging devices 1711 to 1714 are mounted to face in different directions to image a surrounding environment around the mobile body 1700.

Output data from each imaging device is transmitted to a central electronic control unit (ECU) (not illustrated) included in the mobile body 1700. A process or analysis is performed in accordance with an objective and the processed or analyzed data is used for driving control of the mobile body 1700 or surrounding sensing of safety recognition.

By feeding back a control signal to each imaging device through the central ECU, the imaging devices 1711, 1712, 1713, and 1714 also function as a multi-camera configuration in which driving control is different from one device to another. In this case, a measurement range of each imaging device may be optimized and accuracy of surrounding sensing may be improved by controlling driving parameters of each imaging device in accordance with a traveling state or a surrounding environment.

That is, when the central ECU recognizes a scene in which the mobile body 1700 is traveling forward, the front side of the mobile body 1700 is bright due to headlights of the mobile body 1700 or the like. Therefore, the imaging device 1711 performs driving control when the brightness recognition unit 5 performs determination under the high light intensity condition.

An imaging system including the imaging devices 1711, 1712, 1713, and 1714 that image the rear and the front of the mobile body 1700 performs driving control when the brightness recognition unit 5 performs determination under the low light intensity condition.

In this way, the imaging system may include at least two photoelectric conversion devices, and a timing of a pulse signal generated by the timing generator or a weighting coefficient added in the measurement unit may be set to be different among the photoelectric conversion devices.

In this way, it is possible to implement optimum driving control of the imaging system including a multi-camera in accordance with a surrounding environment and to improve surrounding sensing accuracy around the mobile body.

Further, a driving control parameter such as an influence of headlights from other surrounding vehicles may be changed dynamically based on a determination result of the brightness recognition unit of each imaging device. Control associated with an output of the brightness recognition unit may be performed by controlling driving in accordance with an image height of a pixel region on a sensor substrate corresponding to an imaging range of each imaging device.

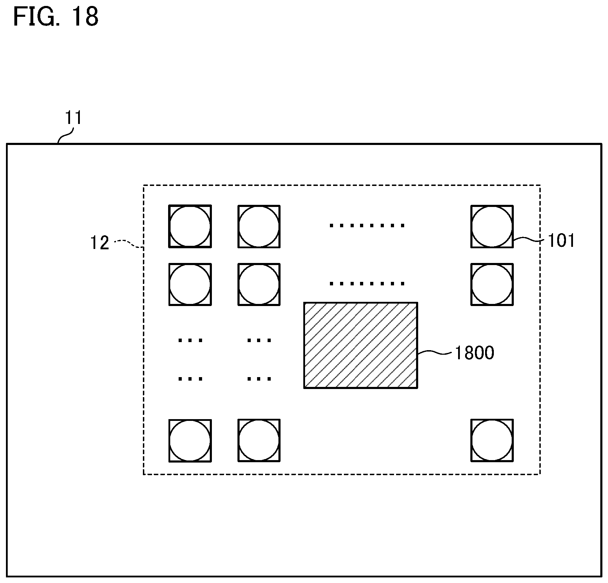

Fig. 18 is a diagram illustrating a configuration example of the photoelectric conversion device according to the fourth embodiment and illustrates the sensor substrate 11, the pixel region 12, and the pixels 101 of the imaging device 1711 imaging the front.

A region 1800 is a region corresponding to the vicinity of a central image height in the pixel region 12. When the mobile body 1700 is travelling forward, a scene that has a relatively high illuminance and is illuminated by own traveling lights, streetlights, or the like is assumed for a region imaged in the region 1800 in the vicinity of the central image height.

On the other hand, a scene that has a relatively low illuminance is assumed for an imaging region other than the region 1800. In this case, a driving condition under the high light intensity condition is applied to pixels included in the region 1800 and a driving condition under the low light intensity condition is applied to pixels included in a region other than the region 1800.

That is, the control of the timing of the pulse signals generated by the timing generator 3 or the weighting coefficient added in the measurement unit 4 may be changed in accordance with a position on a sensor element that is an image height on the photoelectric conversion device 100.

In this way, by controlling a driving condition optimally in accordance with the image height of the sensor, it is possible to perform imaging in an optimum measurement range or resolution in accordance with an illuminance distribution of a real world situation corresponding to a driving scene and perform sensing surroundings of a mobile body with higher accuracy.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2025-087514, filed on May 26, 2025, which is hereby incorporated by reference herein in its entirety.

## Claims

1. A photoelectric conversion device (100) comprising:
a photoelectric conversion unit (1) configured to generate a photon detection signal by avalanche multiplication;
a counter configured to count the photon detection signal output from the photoelectric conversion unit;
a timing generator (3) configured to generate a plurality of pulse signals in a plurality of second exposure periods shorter than a first exposure period corresponding to one frame;
a measurement unit (4) configured to measure the number of pulse signals after first detection of photons during the second exposure period based on the pulse signals generated by the timing generator and to measure a count value corresponding to the number of detected photons within the second exposure period in addition to a weighting coefficient; and
a brightness recognition unit (5) configured to determine a surrounding brightness of the photoelectric conversion device,
wherein a timing of the pulse signal generated by the timing generator or the weighting coefficient added in the measurement unit is controlled in accordance with the surrounding brightness.

2. The photoelectric conversion device according to claim 1, wherein the timing generator increases the number of pulse signals within the second exposure period in a case where the brightness recognition unit determines the surrounding brightness is higher than a predetermined threshold.

3. The photoelectric conversion device according to claim 1 or claim 2, wherein the measurement unit increases a value of the weighting coefficient in a case where the brightness recognition unit determines the surrounding brightness is higher than a predetermined threshold.

4. The photoelectric conversion device according to any one of claims 1 to 3, wherein the timing generator decreases the number of pulse signals within the second exposure period in a case where the brightness recognition unit determines the surrounding brightness is lower than a predetermined threshold.

5. The photoelectric conversion device according to any one of claims 1 to 4, wherein the measurement unit decreases a value of the weighting coefficient in a case where the brightness recognition unit determines the surrounding brightness is lower than a predetermined threshold.

6. The photoelectric conversion device according to any one of claims 1 to 5, wherein the brightness recognition unit determines the brightness based on a statistical value of a pixel signal value of a past frame image.

7. The photoelectric conversion device according to any one of claims 1 to 6, wherein the brightness recognition unit determines the brightness based on a pixel signal value in a region of interest of an acquired frame image.

8. The photoelectric conversion device according to any one of claims 1 to 7, wherein the brightness recognition unit determines the brightness based on illuminance information acquired from another measurement instrument.

9. The photoelectric conversion device according to any one of claims 1 to 8, wherein the brightness recognition unit determines the brightness based on positional information acquired from a measurement instrument.

10. The photoelectric conversion device according to any one of claims 1 to 9, wherein the brightness recognition unit determines the brightness by comparing the surrounding brightness with a predetermined threshold.

11. The photoelectric conversion device according to any one of claims 1 to 10, wherein the timing generator causes the pulse signals during a first half of the second exposure period to be denser than the pulse signals during a second half of the second exposure period while maintaining a constant total number of pulse signals within the second exposure period.

12. The photoelectric conversion device according to any one of claims 1 to 11, wherein the timing generator changes a density of the pulse signals during a first half of the second exposure period in accordance with the brightness while maintaining a constant total number of pulse signals within the second exposure period.

13. The photoelectric conversion device according to any one of claims 1 to 12, wherein the timing generator causes the pulse signals during the second exposure period to be at an equal interval while maintaining a constant total number of pulse signals within the second exposure period.

14. The photoelectric conversion device according to any one of claims 1 to 13, wherein the control of the timing of the pulse signals generated by the timing generator or the weighting coefficient added in the measurement unit is changed in accordance with a position on a sensor element that is an image height of the photoelectric conversion device.

15. A mobile body comprising:
the photoelectric conversion device according to any one of claims 1 to 14; and
a warning device configured to issue a warning based on an output of the photoelectric conversion device.

16. An imaging system comprising:
at least two photoelectric conversion devices according to any one of claims 1 to 15,
wherein the at least two photoelectric conversion devices is configured with a different control of a timing of the pulse signals generated by the timing generator or a different weighting coefficient applied in the measurement unit.

17. A control method of controlling a photoelectric conversion system that includes a photoelectric conversion unit generating a photon detection signal by avalanche multiplication, a counter counting the photon detection signal output from the photoelectric conversion unit, and a timing generator generating a plurality of pulse signals in a plurality of second exposure periods shorter than a first exposure period corresponding to one frame,
the control method comprises:
measuring the number of pulse signals after first detection of photons during the second exposure period based on the pulse signals generated by the timing generators and measuring a count value corresponding to the number of detected photons within the second exposure period in addition to a weighting coefficient,
determining a surrounding brightness of the photoelectric conversion device, and
controlling a timing of the pulse signal generated by the timing generator or the weighting coefficient added in the measuring in accordance with the surrounding brightness.

18. A computer-readable storage medium configured to store a computer program to control a photoelectric conversion system configured to have:
a photoelectric conversion unit configured to generate a photon detection signal by avalanche multiplication;
a counter configured to count the photon detection signal output from the photoelectric conversion unit;
a timing generator configured to generate a plurality of pulse signals in a plurality of second exposure periods shorter than a first exposure period corresponding to one frame;
wherein the computer program comprises instructions for executing the following process of
measuring the number of pulse signals after first detection of photons during the second exposure period based on the pulse signals generated by the timing generator and measuring a count value corresponding to the number of detected photons within the second exposure period in addition to a weighting coefficient,
determining a surrounding brightness of the photoelectric conversion device, and
controlling a timing of the pulse signal generated by the timing generator or the weighting coefficient added in the measuring in accordance with the surrounding brightness.
